(19) Europäisches Patentamt / European Patent Office / Office européen des brevets

(11) **EP 4 769 933 A1**

(12) **EUROPEAN PATENT APPLICATION**
published in accordance with Art. 153(4) EPC

(43) Date of publication:
**01.07.2026 Bulletin 2026/27**

(51) International Patent Classification (IPC):
*H02P 23/14* (2006.01)  *H02K 11/215* (2016.01)
*H02K 11/33* (2016.01)  *G01B 21/22* (2006.01)

(21) Application number: **25861955.0**

(22) Date of filing: **16.04.2025**

(86) International application number:
**PCT/CN2025/089338**

(87) International publication number:
**WO 2026/051368 (12.03.2026 Gazette 2026/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **04.09.2024 CN 202411231480**

(71) Applicant: **Quanzhou Ktsense Microelectronics Co., Ltd.**
**Quanzhou, Fujian 362000 (CN)**

(72) Inventors:
• QIAN, Zhenhuang
  Quanzhou, Fujian 362000 (CN)
• ZHANG, Kaixin
  Quanzhou, Fujian 362000 (CN)
• LIU, Daquan
  Quanzhou, Fujian 362000 (CN)
• WANG, Chao
  Quanzhou, Fujian 362000 (CN)

(74) Representative: **RGTH**
**Patentanwälte PartGmbB**
**Mönckebergstraße 11**
**20095 Hamburg (DE)**

(54) **CALIBRATION SYSTEM AND METHOD FOR CLOSED-LOOP SELF-CALIBRATION OF MOTOR**

(57) This application relates to the field of encoders, and in particular, to a calibration system and method for closed-loop self-calibration of a motor. The system includes an angle sensor and a controller. The angle sensor is configured to detect a rotation angle of a motor. The angle sensor includes an angle correction module, configured to correct the rotation angle based on an angle correction parameter to output a real-time angle. The angle correction module has an angle correction parameter self-calibration function to self-calibrate the angle correction parameter based on a preset calibration mode. The controller is configured to receive the real-time angle, generate a drive signal based on the real-time angle, and send the drive signal to a driver. The drive signal is used to control the driver to adjust at least one physical parameter to adjust rotation of the motor. In this application, self-calibration of the angle correction parameter can be started and completed in a normal operating state of a closed-loop control process of the motor without requiring processes such as suspending operation of the motor and adding or removing additional devices such as a reference encoder and a host.

FIG. 1

## Description

### TECHNICAL FIELD

This application relates to the field of encoders, and in particular, to a calibration system and method for closed-loop self-calibration of a motor.

### BACKGROUND

Angle sensors (encoders) play a critical role in closed-loop control systems, but commonly exhibit nonlinear errors. These errors can affect system stability, typically manifesting as periodic fluctuations in speed.

A nonlinear error refers to an error caused by a nonlinear relationship between a measurement output of an encoder and an actual physical quantity. When the relationship between the output of the encoder and the actual physical quantity is not a simple linear relationship, a nonlinear error occurs. This type of error is typically caused by factors in the encoder's design, manufacturing, or installation process, such as the nonlinear characteristics of optical systems, magnetic systems, or mechanical structures.

The relationship between an angle output by the encoder and an actual angle is not a simple linear relationship and generally cannot be expressed by a single function. Instead, a lookup table needs to be created to record key reference points and their corresponding angle correction parameters to map an output of the encoder to an actual position or angle. For angles between the key reference points, a nonlinear output of the encoder may be fitted within a local range using polynomial functions. Nonlinear errors can be reduced across the entire measurement range by finding an appropriate polynomial fit. The order of the polynomial fit can be selected based on specific circumstances.

When the angle correction parameters need to be calibrated, a reference encoder (e.g., an optical encoder) can be used for calibration. This method is referred to as "torching".

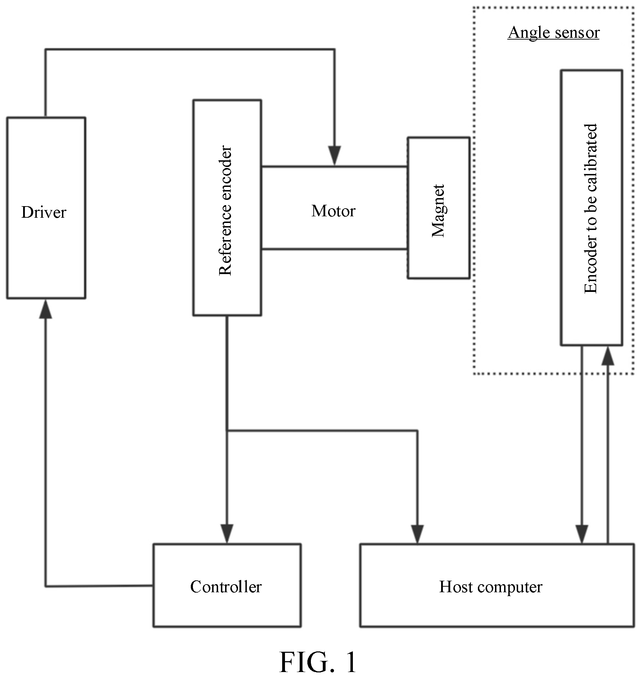

FIG. 1 is a system block diagram for calibrating a motor by implementing a "torching" method. The basic principle of torching is to superimpose an additional reference encoder on an actual output of an encoder to be calibrated. The purpose of this is to measure the actual output of the encoder to be calibrated and compare it with the accurate output of the reference encoder.

In the system block diagram shown in FIG. 1, a calibration system includes a motor, a driver for driving the motor to operate, and a controller for controlling the driver. In addition to an angle sensor (i.e., a magnet and an encoder to be calibrated) installed on the motor, an additional reference encoder further needs to be superimposed. Both the reference encoder and the encoder to be calibrated are used to detect a rotation angle of the motor. The reference encoder may be an encoder with higher measurement accuracy than an encoder to be calibrated, typically an optical encoder that has been calibrated, which is used to output an accurate reference angle. In addition, the system further includes a host computer, configured to determine an angle error based on the reference angle sent by the reference encoder and an angle to be calibrated sent by the encoder to be calibrated, and send the angle error to the encoder to be calibrated to complete the calibration. After the calibration is ended, the reference encoder and the host computer need to be removed, and then the motor operates independently.

It can be seen that in the system of the above-mentioned related art, the inventors have identified the following issues: 1. Calibration by comparison with a reference encoder is required, which introduces an additional device. 2. A closed-loop system needs to be temporarily converted into an open-loop system to calibrate angle correction parameters in a non-operating state with the motor running at a constant speed. That is, a normal operating state needs to be suspended, and additional devices such as a reference encoder and a host need to be added before the angle correction parameters can be calibrated in the non-operating state. After calibration is completed, the additional devices such as the added reference encoder and host need to be removed before the normal operating state can be resumed. The transition between the normal operating state and the non-operating state cannot be achieved seamlessly through internal commands alone.

Therefore, there is a need for a calibration system that can automatically calibrate angle correction parameters in a normal operating state without removing additional devices.

### SUMMARY

To automatically calibrate angle correction parameters in a normal operating state, this application provides a calibration system and method for closed-loop self-calibration of a motor.

According to a first aspect, this application provides a calibration system for closed-loop self-calibration of a motor, which adopts the following technical solution: The calibration system for closed-loop self-calibration of a motor includes: an angle sensor, disposed on a motor, and configured to detect a rotation angle of the motor, where the angle sensor includes an angle correction module, the angle correction module is configured to correct the rotation angle based on an angle correction parameter to output a real-time angle, and the angle correction module has an angle correction parameter self-calibration function to self-calibrate the angle correction parameter based on a preset calibration mode; and a controller, communicably connected to the angle sensor, where the controller is configured to receive the real-time angle, generate a drive signal based on the real-time angle, and send the drive signal to a driver configured to drive the motor to operate, and the drive signal is used to control the driver to adjust at least one physical parameter to adjust rotation of the motor.

In a further solution, the angle correction module includes: a parameter calculator, configured to receive the rotation angle and calculate the angle correction parameter based on the preset calibration mode and the rotation angle to output a new angle correction parameter.

In a further solution, the angle correction module further includes: an error corrector, communicably connected to the parameter calculator to receive the new angle correction parameter and correct the rotation angle based on the new angle correction parameter to output the real-time angle, where the rotation angle is input to an angle input terminal of the parameter calculator and an angle input terminal of the error corrector simultaneously, an output terminal of the parameter calculator is connected to a parameter input terminal of the error corrector, and an output terminal of the error corrector is configured to output the real-time angle.

In a further solution, the angle correction module further includes: a system stability monitor, configured to receive the rotation angle, determine, based on the rotation angle, whether the system is stable, and when the system is stable, enable the parameter calculator, where the rotation angle is first input to the system stability monitor and then input to the parameter calculator through the system stability monitor, and an output terminal of the system stability monitor is connected to the angle input terminal of the parameter calculator.

In a further solution, the angle correction module further includes: a first timer, configured to cyclically output a timing time and provide the timing time to the system stability monitor; and a trigger button, configured to accept an input of an operator and be manually triggered to calibrate the angle correction parameter in an initial state or an erroneous state, where an output terminal of the trigger button is connected to the first timer or the parameter calculator.

In a further solution, the output terminal of the trigger button is connected to both the first timer and the parameter calculator.

In a further solution, the angle correction module further includes: a non-volatile memory, configured to store the new angle correction parameter and provide the new angle correction parameter to the parameter calculator after the system is powered up again.

In a further solution, the controller further includes an angle stabilizer, configured to receive the real-time angle, eliminate unstable jitter of the real-time angle, and provide the real-time angle with jitter eliminated to the drive signal generator.

In a further solution, the angle stabilizer is a filter.

In a further solution, the filter is a digital filter.

In a further solution, the digital filter is a low-pass filter.

In a further solution, the filter is an analog filter.

In a further solution, the preset calibration mode includes a periodic calibration mode, and the calibration system for closed-loop self-calibration of a motor self-calibrates the angle correction parameter in a normal operating state periodically.

In a further solution, the system further includes a second timer, configured to enable the angle correction parameter self-calibration function periodically.

In a further solution, when the angle correction module further includes the first timer, the first timer and the second timer are a same timer.

In a further solution, the system further includes an oscillator, configured to provide a stable clock to the first timer or the second timer.

In a further solution, the preset calibration mode includes a real-time calibration mode, and the calibration system for closed-loop self-calibration of a motor self-calibrates the angle correction parameter in a normal operating state in real time.

In a further solution, the preset calibration mode includes a single calibration mode, and the calibration system for closed-loop self-calibration of a motor self-calibrates the angle correction parameter in the initial state or the erroneous state.

In a further solution, the angle sensor is one of a magnetic angle sensor, a photoelectric angle sensor, and a resistive angle sensor.

According to a second aspect, this application further provides a calibration method for closed-loop self-calibration of a motor, which adopts the following technical solution: The calibration method for closed-loop self-calibration of a motor includes: mounting an angle sensor on a motor, where the angle sensor is configured to detect a rotation angle of the motor, the angle sensor includes an angle correction module, and the angle correction module has an angle correction parameter self-calibration function; self-calibrating an angle correction parameter based on a preset calibration mode;

correcting the rotation angle based on the calibrated angle correction parameter using the angle sensor to output a real-time angle; and communicably connecting a controller to the angle sensor, where the controller is configured to receive the real-time angle, generate a drive signal based on the real-time angle, and send the drive signal to a driver configured to drive the motor to operate, and the drive signal is used to control the driver to adjust at least one physical parameter to adjust rotation of the motor.

In summary, in this application, self-calibration of the angle correction parameter can be started and completed in a normal operating state of a closed-loop control process of the motor without requiring processes such as suspending operation of the motor and adding or removing additional devices such as a reference encoder and a host.

BRIEF DESCRIPTION OF THE DRAWINGS

FIG. 1 is a block diagram of a system for implementing "torching" calibration in the related technology;
FIG. 2 is a block diagram of a calibration system for closed-loop self-calibration of a motor according to this application;
FIG. 3 is a block diagram of an internal structure of an angle correction module according to an embodiment of this application;
FIG. 4 is a block diagram of an internal structure of an angle correction module according to another embodiment of this application; and
FIG. 5 is a block diagram of an internal structure of an angle correction module according to still another embodiment of this application;

DETAILED DESCRIPTION

It should be noted that the terms "first" and "second" are used merely for the purpose of description, and shall not be construed as indicating or implying relative importance or implicitly specifying a quantity of indicated technical features. Therefore, a feature limited by "first" or "second" may explicitly or implicitly include one or more of the features.

The following describes an embodiment of this application with reference to the accompanying drawings of this specification. However, this embodiment shall not be construed as a limitation to this application.

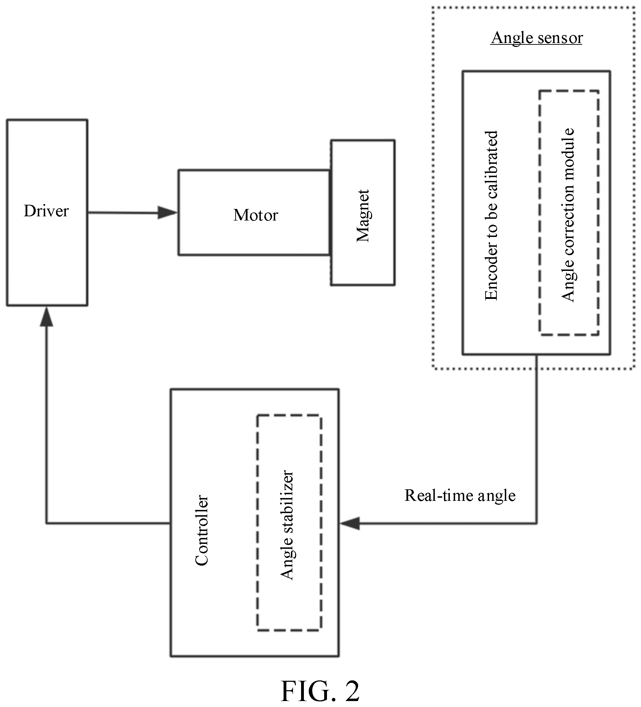

FIG. 2 is a block diagram of a calibration system for closed-loop self-calibration of a motor according to this application. An embodiment of this application provides a calibration system for closed-loop self-calibration of a motor, including an angle sensor and a controller.

The driver is configured to drive the motor to operate. The controller is communicably connected to the angle sensor and configured to receive a real-time angle, generate a drive signal (e.g., in some embodiments, the drive signal may be a drive current value) based on the real-time angle, and send the drive signal to the driver. The drive signal is used to control the driver to adjust at least one physical parameter to adjust rotation of the motor. For example, the driver may adjust the operating current, voltage, and the like of the motor to adjust the rotation speed of the motor. In the driver of the motor system, the controller, the driver, a drive transistor, among other components may be integrated on a same PCB board, or may be disposed separately. This is not limited in this application.

The angle sensor may be a magnetic angle sensor, a photoelectric angle sensor, a resistive angle sensor, or the like, and a physical quantity sensed by the sensor is not limited. For ease of description, in this embodiment of this application, the magnetic angle sensor (that is, a magnetic encoder) is used for specific description. The magnetic encoder is fixedly disposed on a rotor or a stator of the motor. In this embodiment of this application, the magnetic encoder is fixedly disposed relative to the stator of the motor. A magnet is disposed on a rotating shaft of the motor. The magnet synchronously rotates with the rotating shaft. The magnetic encoder is configured to detect a rotation angle of the magnet. In another embodiment of this application, an optical encoder may be alternatively used for implementation. For example, the optical encoder may be fixed relative to the stator of the motor. An optical grating is disposed on a rotating shaft of the motor. The optical grating synchronously rotates with the rotating shaft. The optical encoder is configured to detect a rotation angle of the magnet.

With respect to the position of the magnetic encoder relative to the magnet, the magnetic encoder may use an on-axis detection solution or an off-axis detection solution. On-axis detection and off-axis detection are two different manners of magnetic induction detection in the art. It may be understood that the magnetic encoder provided in this application uses the on-axis detection solution. The magnetic encoder is located on a side of the magnet along an axial direction of an output shaft of the motor, thereby obtaining high angle detection accuracy.

It can be understood that, in this embodiment of this application, the angle sensor includes an angle correction module. The angle correction module has an angle correction parameter self-calibration function, configured to correct the rotation angle based on an angle correction parameter and output the real-time angle, and self-calibrate the angle correction parameter based on a preset calibration mode.

In a normal operating state of this embodiment of this application, the angle sensor detects the rotation angle of the motor in real time, and sends the real-time angle generated based on the rotation angle to the controller. The controller generates the drive signal based on the real-time angle, and sends the drive signal to the driver. The driver adjusts the rotation of the motor in real time based on the drive signal.

When the real-time angle is generated based on the rotation angle, whether the angle correction parameter needs to be self-calibrated may be determined based on the preset calibration mode. When the angle correction parameter does not need to be self-calibrated, the angle correction module corrects the rotation angle based on the set angle correction parameter and outputs the real-time angle. When the angle correction parameter needs to be self-calibrated, the angle correction module calculates the set angle correction parameter based on the rotation angle and the set angle correction parameter to output a new angle correction parameter. The angle correction module corrects the rotation angle based on the new angle correction parameter and outputs the real-time angle. The new angle correction parameter also replaces the set angle correction parameter, so that update is continuously performed in this way to obtain an increasingly accurate angle correction parameter, thereby implementing the angle correction parameter self-calibration function.

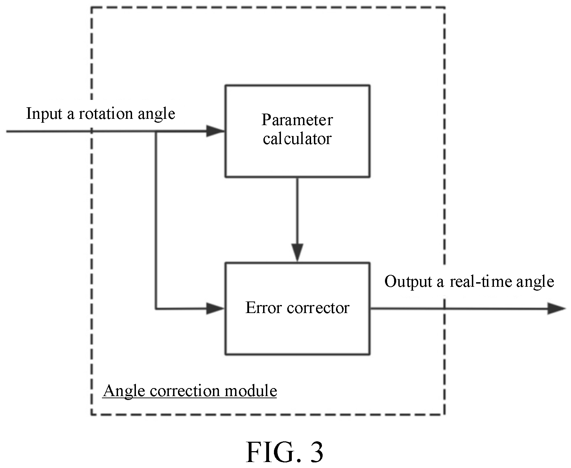

FIG. 3 is a block diagram of an internal structure of an angle correction module according to an embodiment of this application. The angle correction module may include a parameter calculator and an error corrector. As shown in the figure, the rotation angle is input to an angle input terminal of the parameter calculator and an angle input terminal of the error corrector simultaneously, an output terminal of the parameter calculator is connected to a parameter input terminal of the error corrector, and an output terminal of the error corrector is configured to output the real-time angle. The parameter calculator is configured to receive the rotation angle and calculate the angle correction parameter based on the preset calibration mode and the rotation angle to output a new angle correction parameter. The error corrector is communicably connected to the parameter calculator to receive the new angle correction parameter and correct the rotation angle based on the new angle correction parameter to output the real-time angle.

The rotation angle is input to an angle input terminal of the parameter calculator and an angle input terminal of the error corrector simultaneously, an output terminal of the parameter calculator is connected to a parameter input terminal of the error corrector, and an output terminal of the error corrector is configured to output the real-time angle.

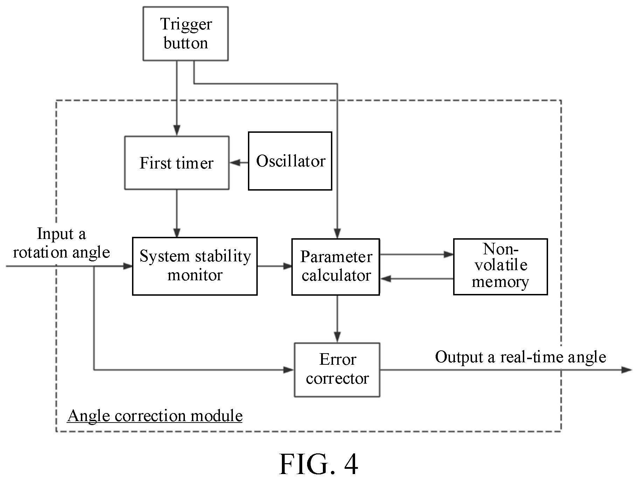

For implementations of the parameter calculator and the error corrector, refer to the description about FIG. 4.

FIG. 4 is a block diagram of an internal structure of an angle correction module according to another embodiment of this application. In this embodiment, the angle correction module includes a parameter calculator, an error corrector, a system stability monitor, a non-volatile memory, a timer (in this embodiment, a first timer and a second timer are the same), an oscillator (for example, an oscillator made inside a crystal oscillator or a CMOS chip), and a trigger button.

Still referring to FIG. 4, in this embodiment, the rotation angle is input to an input terminal of the system stability monitor and an angle input terminal of the error corrector simultaneously. An output terminal of the system stability monitor is connected to an angle input terminal of the parameter calculator. The system stability monitor is configured to receive the rotation angle, determine, based on the rotation angle, whether the system is stable, and enable the parameter calculator when the system is stable. An output terminal of the parameter calculator is connected to a parameter input terminal of the error corrector. The parameter calculator is configured to receive the rotation angle and calculate the angle correction parameter based on the preset calibration mode and the rotation angle to output a new angle correction parameter. The error corrector is configured to receive the rotation angle and correct the rotation angle based on the new angle correction parameter to output a real-time angle. There is bidirectional communication between the parameter calculator and the non-volatile memory. The parameter calculator may write the new angle correction parameter into the non-volatile memory or may read a stored angle correction parameter from the non-volatile memory. An output terminal of the trigger button may be connected to a trigger terminal of the timer, and is configured to trigger starting of the timer. Therefore, a more professional determining of whether to start system stability monitoring may be made by a professional person based on different use environments and conditions. This determining may also indirectly trigger whether to self-calibrate the angle correction parameter and/or whether to correct an error of the rotation angle. The output terminal of the trigger button may also be connected to a trigger terminal of the parameter calculator, and is configured to trigger the parameter calculator to calculate the angle correction parameter to complete self-calibration. In this way, in some scenarios in which calibration errors are excessively large, this function may be manually disabled, and the angle correction parameter previously stored in the system is used to perform error correction on the rotation angle output by the magnetic encoder; may be alternatively configured to indirectly trigger whether to perform error correction on the rotation angle; and may be alternatively configured to trigger the parameter calculator to write the new angle correction parameter into the non-volatile memory or read the stored angle correction parameter from the non-volatile memory. A person skilled in the art may determine, based on a current correction effect, whether to read or store the angle correction parameter. The timer cyclically outputs a timing time, and the oscillator (for example, the oscillator made inside the crystal oscillator or the CMOS chip) provides a stable clock to the timer. In addition, in the embodiment including the system stability monitor, if the system stability monitor is implemented by using a method for determining stability of the magnetic encoder based on a timestamp register, a stable clock source may be alternatively provided to the timestamp register in the method.

There are many implementations of the system stability monitor. A speed stability detection sensor commonly used in the art may be used, or a self-detection method disclosed in, for example, Patent No. CN116892970A may be used to detect speed stability. The method is specifically as follows: N angle reference points {ref[0], ref[1], ..., ref[n-1], ref[n], ..., ref[N-1]} are sequentially disposed from 0 to 360 degrees, and time points {TS[0], TS[1], ..., TS[n-1], TS[n], ..., TS[N-1]} at which angle output values of the magnetic encoder pass the angle reference points are recorded. These time points are referred to as timestamps. For the angle reference point ref[n], a $q^{th}$ period at which the rotating shaft passes ref[n] is recorded as Pq, and ref[n] is measured multiple times, and periods of the rotating shaft are recorded to form a periodic dataset: {P1, P2, ..., Pq-1, Pq, ..., PQ}. ref[n] is used as an example. A duration between time points at which the angle output value of the magnetic encoder passes ref[n] for the $2^{nd}$ time and for the $1^{st}$ time is a period P1 of the rotating shaft that is measured using ref[n]; when a duration between time points at which the angle output value of the magnetic encoder passes ref[n] for the $3^{rd}$ time and for the $2^{nd}$ time is a period P2 of the rotating shaft measured using ref[n]; and so on. Then, the period set {P1, P2, ..., Pq-1, Pq, ..., PQ} is calculated to obtain an average period P of the rotating shaft. The system may also use the average period P of the rotating shaft as an indicator for determining the stability of the magnetic encoder. Then, whether the system meets the premise of entering a stable state may be determined based on one of the following methods: (1) An absolute value of a difference between a current period Pq and a previous period Pq-1 is calculated and it is determined whether the absolute value is less than a first preset value Rlim1, that is, it is determined whether the formula |Pq - Pq-1| < Rlim1 holds. (2) Determining is performed based on a relationship between a difference between timestamps TS[n] and TS[n-1] at two adjacent reference points ref[n] and ref[n-1] and an angle value between the two reference points ref[n] and ref[n-1], that is, it is determined whether a formula $\left| \frac{TS[n]-TS[n-1]}{ref[n]-ref[n-1]} - \frac{P}{360} \right| < k$ is valid. (3) An absolute value of a difference between a current period Pq and P is calculated, and it is determined whether the absolute value is less than a third preset value Rlim3, that is, it is determined whether the formula |Pq - P| < Rlim3 holds. When it is determined, based on one of the foregoing methods, that a corresponding formula holds (the determining system meets the premise of entering a stable state) and a quantity of times that the formula continuously holds reaches a particular quantity of times, it is determined that the system enters a stable state.

In the foregoing method disclosed in CN116892970A, whether a rotation speed value of a rotating shaft is stable is mainly determined by calculating differences between periods, thereby detecting speed stability, and overcoming an effect of jitter of the angle output value of the magnetic encoder caused by noise. Under the teaching of this method, a person skilled in the art may easily adjust the method to design another self-detection method with a consistent principle but different specific operation steps. For example, a variance of a period or a speed may be calculated, and when a quantity of times that the variance of the period or the speed is less than a preset value within a particular time reaches a preset quantity of times, it is determined that the system is in a stable state. Alternatively, periodic datasets of the plurality of angle reference points ref[n] may be separately calculated, and when one of Methods (1) to (3) is used to determine whether the system enters a stable state, the separately calculated period data of the plurality of angle reference points ref[n] is considered. Further alternatively, after it is determined based on one of Methods (1) and (3) that a corresponding formula holds (it is determined that the system meets the premise of entering a stable state), although the quantity of times that the formula continuously holds cannot reach a particular quantity of times, on the premise that a particular condition is met, it is also determined that the system enters a stable state. A person skilled in the art may further determine whether the rotation speed is stable using a non-self-calibration method. For example, a signal source is disposed on a rotor or a stator of a motor, a detection apparatus for a signal source is disposed on the other end of the rotor or the stator, a rotation period or a rotation speed of the motor is calculated by detecting whether a relative position between the signal source and the detection apparatus returns to an initial state, and whether the rotation is stable is determined based on the rotation period or the calculated rotation speed. This is not limited herein in this application.

There are also many implementations of the parameter calculator. For example, Patent Application CN117168530A discloses a self-calibration method for a magnetic encoder. The method is specifically as follows: For example, to obtain the angle correction parameter in this application, N angle reference points are sequentially set from 0 to 360 degrees, and initial values of N nonlinear angle error reference values are correspondingly set. A time point at which the angle output value of the magnetic encoder passes each angle reference point is recorded, and the time point is referred to as a timestamp. This time point is actually affected by noise and is unstable, but the noise is suppressed through subsequent filtering calculation (such as low-pass filtering calculation described subsequently) of performing iterative averaging repeatedly. It is then determined whether rotation of a rotating shaft is in a constant-speed rotation state, and if yes, the N nonlinear angle error reference values are iterated. Specifically, based on a difference between timestamps corresponding to a former angle reference point $ANG[n - x]$ and a latter angle reference point $ANG[n]$, a rotation period P of the rotating shaft, and a nonlinear angle error reference value corresponding to the former angle reference point, a nonlinear angle error reference value of the latter angle reference point is calculated. For example, an actual angle $ANG_{n-x \to n}$ by which the rotating shaft rotates from the former angle reference point to the latter angle reference point is first calculated using $ANG_{n-x \to n} = \frac{TS[n]-TS[n-x]}{P} \times 360$ , and a new nonlinear angle error reference value corresponding to the latter angle reference point $ANG[n]$ is then calculated using

$ref_{new}[n] = ANG_{n-x \to n} + ref[n-x] - \frac{360}{N}$ , where TS [n] is a timestamp corresponding to the former angle reference point, TS [n - x] is a timestamp corresponding to the latter angle reference point, P is a period of the rotating shaft, and a method for calculating P is described in subsequent parts of this patent application. Filtering calculation is then performed on the historically obtained nonlinear angle error reference value, for example, using low-pass filtering, to obtain a filtered nonlinear angle error reference value, and this operation is performed on all angle reference points. For example, the low-pass filtering calculation may specifically use ref [n] <= ref[n] + $K_{ref}$(ref$_{new}$[n] - ref [n]), where ref[n] is a value obtained after filtering of ref$_{new}$[n], ref[n] is a previously obtained nonlinear angle error reference value corresponding to the angle reference point $ANG[n], ref_{new}[n]$ is a new nonlinear angle error reference value corresponding to the angle reference point ANG [n], $K_{ref}$ is a low-pass filter coefficient, and 0 < $K_{ref} \le$ 1. Then, an average value of the filtered nonlinear angle error reference values of the angle reference points is obtained. Specifically,

$ref_{mean} = \frac{1}{N}\sum_{i=0}^{N-1} ref[i]$ is calculated by subtracting the average value from each filtered nonlinear angle error reference value. Specifically, ref$_{out}$ [i] = ref [i] - ref$_{mean}$ i = 0, 1, 2...N - 1 is calculated, thereby eliminating a zero offset of the nonlinear angle error reference value. Each filtered nonlinear angle error reference value ref$_{out}$ [i] from which the average value is subtracted is used as a finally output nonlinear angle error reference value (equivalent to "the angle correction parameter" in this application).

In the foregoing method disclosed in CN117168530A, a method for calculating a rotation period P is as follows: First, a difference between two timestamps of two consecutive rotations of a same angle reference point is calculated. If the difference is greater than a particular threshold Pmin (due to noise, there is a small probability that a signal quickly jitters left and right near the angle reference point, for example, by 22.5 degrees, which may cause two times of passing 22.5 degrees to be recorded, but the two times have a very small interval and are not a period. To exclude this case, a minimum threshold Pmin is set based on a maximum rotation speed that may be encountered during actual use of the motor, and only when the time of passing an angle reference value twice is greater than Pmin, a difference between the two timestamps is calculated as a period), the difference is used as a rotation period obtained based on the angle reference point, to exclude impact of excessive noise on a calculation result. The rotation period may be selected as a period of a subsequent round of rotation, or processing such as averaging may be performed on rotation periods obtained based on a plurality of angle reference points, to obtain the period of the subsequent round of rotation. Low-pass filtering is then performed on a period obtained through historical rotation to obtain a filtered period as the rotation period P to be finally output through calculation.

For another example, Patent Application CN115355937A also discloses a self-calibration method for a magnetic encoder. The method is specifically as follows: For example, to obtain the angle correction parameter in this application, low-pass filtering is performed on the angle value θdet(ij) output by the magnetic encoder for a jth time in an ith round to improve linearity of detected data. The filtered value θfilt(ij) obtained after the filtering is considered as a result of performing linear correction on the detected value θdet(ij). N reference points θref(n) are set within 0 to 360 degrees, the detected value θdet(ij) closest to each reference point θref(n) in each period is selected, and θcal(i-n) = θfilt(ij) - θdet(ij) is calculated as a difference between a calibration result and a measurement result for use as a modification value of the ith period of the reference point θref(n). For each reference point, there are p corresponding modification values in p periods, and a relatively accurate target modification value θcal(n) may be obtained by normalizing the p modification values. Therefore, the target modification value θcal(n) corresponding to each reference point may be obtained to form a modification reference table (equivalent to the "angle modification parameter" in this application).

For another example, the parameter calculator may perform a Z transform on the angle error, and calculate harmonic component coefficients, so that the input angle is compensated using the harmonic component coefficients in the error corrector to obtain the corrected real-time angle value.

It can be understood that the preset calibration mode includes a periodic calibration mode, a real-time calibration mode, and a single calibration mode. The parameter calculator calculates the angle correction parameter based on the preset calibration mode and the rotation angle to output a new angle correction parameter, which may be specifically divided into the following several cases based on the different preset calibration modes used.

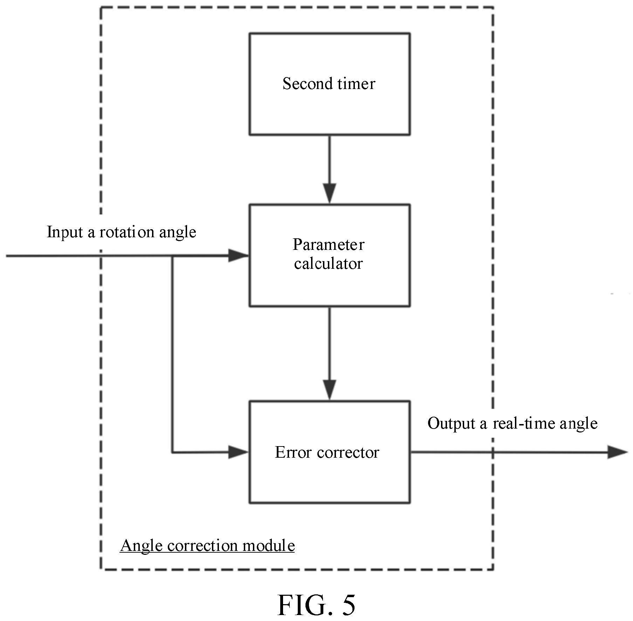

When the periodic calibration mode is used, the calibration system for closed-loop self-calibration of a motor periodically calibrates the angle correction parameter in a normal operating state. A timer may be added to the calibration system for closed-loop self-calibration of a motor, and the timer cyclically outputs a timing time. In an embodiment including the system stability monitor, the timer is a first timer, and may provide the timing time to the system stability monitor, to periodically enable system stability detection, and after the system is stable, automatically enable the parameter calculator to perform an angle correction parameter self-calibration function. In an embodiment that does not include a system stability monitor, for example, referring to FIG. 5, the timer is a second timer, and the timing time may be provided to the parameter calculator, to periodically enable the angle correction parameter self-calibration function. Certainly, in an embodiment including a system stability monitor, both the first timer and the second timer may be alternatively included, and the first timer and the second timer may be alternatively a same timer.

When the real-time calibration mode is used, the calibration system for closed-loop self-calibration of a motor calibrates the angle correction parameter in real time in the normal operating state. It may be understood that in most use scenarios, the periodic calibration mode may be used to resolve the problem. However, if an actual use environment has relatively large impact on the system, the real-time calibration mode may be used, to enable the angle correction parameter to be in the latest state in real time. It may be understood that, preferably, in the real-time calibration mode, the system stability monitor is used to determine system stability, and self-calibration is performed when the system is stable.

When the single calibration mode is used, the calibration system for closed-loop self-calibration of a motor may calibrate the angle correction parameter in the initial state or the erroneous state. The trigger button is configured to be manually triggered to calibrate the angle correction parameter in an initial state or an erroneous state. An output terminal of the trigger button may be connected to a trigger terminal of the first timer, and is configured to trigger starting of the first timer to trigger the system stability monitor.

It can be understood that, in many cases, only a single calibration mode needs to be used, and the angle correction parameter is calibrated in the initial state or the erroneous state. It should be noted that, the single calibration mode in this embodiment of this application is also performed in the normal operating state of the calibration system for closed-loop self-calibration of a motor, and self-calibration of the angle correction parameter can be started and completed in a normal operating state of a closed-loop control process of the motor without requiring processes such as suspending operation of the motor and adding or removing additional devices such as a reference encoder and a host.

In this embodiment of this application, the system stability monitor is configured to monitor stability of the system, to ensure that calibration is performed only when the system is stable, thereby reducing storage or use of an angle correction parameter that is incorrect or has a larger error as a new angle correction parameter when the system is unstable.

It can be understood that, after the system runs stably for a period of time, the new angle correction parameter continuously calculated (that is, self-calibrated) by the parameter calculator is a preferred parameter that relatively meets a current use environment and the system. However, after the system is powered down, the foregoing preferred parameter is lost, and the system needs to perform continuous calculation (that is, self-calibration) again to obtain the preferred parameter. To reduce loss of the preferred parameter, a non-volatile memory is added. The non-volatile memory is configured to store the new angle correction parameter (the preferred parameter) and provide the new angle correction parameter to the parameter calculator after the system is powered up again.

It can be understood that, in a motor system, especially, a high-speed motor system, when a high-speed motor is in a normal operating state, the high-speed motor is unlikely to enter an unstable state. Therefore, it may be considered as appropriate whether to add a system stability monitor to this use scenario.

It may be understood that, in this embodiment, components such as the system stability monitor, the non-volatile memory, the timer (including the first timer and the second timer), the oscillator (for example, an oscillator made in a crystal oscillator or a CMOS chip), and the trigger button may be selected according to requirements of an actual use environment, and are not limited in this application. For example, as for different combinations, the system stability monitor and the non-volatile memory may be selected to be included, the system stability monitor, the timer, and the crystal oscillator may be selected to be included, the system stability monitor, the timer, and the trigger button may be selected to be included, the system stability monitor and the trigger button may be selected to be included, the non-volatile memory and the trigger button may be selected to be included, and the like.

During actual application of this embodiment of this application, due to the impact by a change of an environmental factor and the like, real-time angle information sent by the motor to the controller usually has particular fluctuations. The fluctuations are relatively large sometimes, and tend to introduce a particular error in a subsequent drive signal generation process. To reduce this type of error, the controller may further include an angle stabilizer (referring to FIG. 2 at the same time), configured to receive the real-time angle, eliminate unstable jitter of the real-time angle, and provide the real-time angle with jitter eliminated to the drive signal generator. The angle stabilizer is essentially a filter that filters out high frequencies, and may be a digital filter or an analog filter. When the motor sends a digital signal, a digital filter such as a low-pass filter may be used. When the motor sends an analog signal, an analog filter such as an active filter or a passive filter may be used.

A person skilled in the art may clearly understand that, for the purpose of convenient and brief description, division of the foregoing functional modules is taken as an example for illustration. During actual application, the foregoing functions can be allocated to different functional modules and implemented as required, that is, an internal structure of an apparatus is divided into different functional modules to implement all or some of the functions described above. The foregoing system, apparatus, and unit, refer to a corresponding process in the foregoing method embodiments, and details are not described herein again.

In the several embodiments provided in this application, the disclosed system, apparatus, and method may be implemented in other manners. When the integrated unit is implemented in the form of a software functional unit and sold or used as an independent product, the integrated unit may be stored in a computer-readable storage medium. Based on such an understanding, the technical solutions of this application essentially, or the part contributing to the related technology, or all or some of the technical solutions may be implemented in the form of a software product. The computer software product is stored in a storage medium and includes several instructions for instructing a computer device (processor) to perform all or some of the steps of the methods described in the embodiments of this application.

The foregoing embodiments are merely intended to describe the technical solutions of this application in detail, but the descriptions of the foregoing embodiments are merely intended to help understand the method and core idea of this application and should not be construed as a limitation to this application. A variation or replacement readily figured out by a person skilled in the art within the technical scope disclosed in this application shall fall within the scope of protection of this application.

**Claims**

1.  A calibration system for closed-loop self-calibration of a motor, comprising:

    an angle sensor, disposed on a motor, and configured to detect a rotation angle of the motor, wherein the angle sensor comprises an angle correction module, the angle correction module is configured to correct the rotation angle based on an angle correction parameter to output a real-time angle, and the angle correction module has an angle correction parameter self-calibration function to self-calibrate the angle correction parameter based on a preset calibration mode; and
    a controller, communicably connected to the angle sensor, wherein the controller is configured to receive the real-time angle, generate a drive signal based on the real-time angle, and send the drive signal to a driver configured to drive the motor to operate, and the drive signal is used to control the driver to adjust at least one physical parameter to adjust rotation of the motor, wherein
    the angle correction module comprises:

    a parameter calculator, configured to receive the rotation angle and calculate the angle correction parameter based on the preset calibration mode and the rotation angle to output a new angle correction parameter; and
    a system stability monitor, configured to receive the rotation angle, determine, based on the rotation angle, whether the system is stable, and when the system is stable, enable the parameter calculator, wherein the controller further comprises an angle stabilizer, configured to receive the real-time angle, eliminate unstable jitter of the real-time angle, and provide the real-time angle with jitter eliminated to the drive signal generator.

2.  The calibration system for closed-loop self-calibration of a motor according to claim 1, wherein the angle correction module comprises:
    the parameter calculator, configured to receive the rotation angle and calculate the angle correction parameter based on the preset calibration mode and the rotation angle to output the new angle correction parameter.

3.  The calibration system for closed-loop self-calibration of a motor according to claim 2, wherein the angle correction module further comprises:

    an error corrector, communicably connected to the parameter calculator to receive the new angle correction parameter and correct the rotation angle based on the new angle correction parameter to output the real-time angle, wherein
    the rotation angle is input to an angle input terminal of the parameter calculator and an angle input terminal of the error corrector simultaneously, an output terminal of the parameter calculator is connected to a parameter input terminal of the error corrector, and an output terminal of the error corrector is configured to output the real-time angle.

4.  The calibration system for closed-loop self-calibration of a motor according to claim 3, wherein the rotation angle is first input to the system stability monitor and then input to the parameter calculator through the system stability monitor, and an output terminal of the system stability monitor is connected to the angle input terminal of the parameter calculator.

5. The calibration system for closed-loop self-calibration of a motor according to claim 1, wherein the angle correction module further comprises:

a first timer, configured to cyclically output a timing time and provide the timing time to the system stability monitor; and
a trigger button, configured to accept an input of an operator and be manually triggered to calibrate the angle correction parameter in an initial state or an erroneous state, wherein an output terminal of the trigger button is connected to the first timer or the parameter calculator.

6. The calibration system for closed-loop self-calibration of a motor according to claim 5, wherein the output terminal of the trigger button is connected to both the first timer and the parameter calculator.

7. The calibration system for closed-loop self-calibration of a motor according to claim 1, wherein the angle correction module further comprises:
a non-volatile memory, configured to store the new angle correction parameter and provide the new angle correction parameter to the parameter calculator after the system is powered up again.

8. The calibration system for closed-loop self-calibration of a motor according to claim 1, wherein the angle stabilizer is a filter.

9. The calibration system for closed-loop self-calibration of a motor according to claim 8, wherein the filter is a digital filter.

10. The calibration system for closed-loop self-calibration of a motor according to claim 9, wherein the digital filter is a low-pass filter.

11. The calibration system for closed-loop self-calibration of a motor according to claim 8, wherein the filter is an analog filter.

12. The calibration system for closed-loop self-calibration of a motor according to any one of claims 1 to 11, wherein the preset calibration mode comprises a periodic calibration mode, and the calibration system for closed-loop self-calibration of a motor self-calibrates the angle correction parameter in a normal operating state periodically.

13. The calibration system for closed-loop self-calibration of a motor according to claim 12, further comprising a second timer, configured to enable the angle correction parameter self-calibration function periodically.

14. The calibration system for closed-loop self-calibration of a motor according to claim 13, wherein when the angle correction module further comprises the first timer, the first timer and the second timer are a same timer.

15. The calibration system for closed-loop self-calibration of a motor according to claim 14, further comprising an oscillator, configured to provide a stable clock to the first timer or the second timer.

16. The calibration system for closed-loop self-calibration of a motor according to any one of claims 1 to 11, wherein the preset calibration mode comprises a real-time calibration mode, and the calibration system for closed-loop self-calibration of a motor self-calibrates the angle correction parameter in a normal operating state in real time.

17. The calibration system for closed-loop self-calibration of a motor according to any one of claims 1 to 11, wherein the preset calibration mode comprises a single calibration mode, and the calibration system for closed-loop self-calibration of a motor self-calibrates the angle correction parameter in the initial state or the erroneous state.

18. The calibration system for closed-loop self-calibration of a motor according to any one of claims 1 to 11, wherein the angle sensor is one of a magnetic angle sensor, a photoelectric angle sensor, and a resistive angle sensor.

19. A calibration method for closed-loop self-calibration of a motor, comprising:

mounting an angle sensor on a motor, wherein the angle sensor is configured to detect a rotation angle of the motor, the angle sensor comprises an angle correction module, the angle correction module has an angle correction parameter self-calibration function, the angle correction module comprises a parameter calculator and a system stability monitor, the parameter calculator is configured to receive the rotation angle and calculate the angle correction parameter based on a preset calibration mode and the rotation angle to output a new angle correction parameter, and the system stability monitor determines, based on the rotation angle, whether a system is stable, and enables the parameter calculator when the system is stable;

self-calibrating the angle correction parameter based on the preset calibration mode;

correcting the rotation angle based on the calibrated angle correction parameter using the angle sensor to output a real-time angle; and

communicably connecting a controller to the angle sensor, wherein the controller is configured to receive the real-time angle, generate a drive signal based on the real-time angle, and send the drive signal to a driver configured to drive the motor to operate, the drive signal is used to control the driver to adjust at least one physical parameter to adjust rotation of the motor, the controller further comprises an angle stabilizer, and the angle stabilizer is configured to receive the real-time angle, eliminate unstable jitter of the real-time angle, and provide the real-time angle with jitter eliminated to the drive signal generator.

FIG. 1

FIG. 2

Input a rotation angle

Parameter calculator

Error corrector

Output a real-time angle

Angle correction module

FIG. 3

FIG. 4

FIG. 5

## INTERNATIONAL SEARCH REPORT

| International application No. |
| --- |
| **PCT/CN2025/089338** |

### A. CLASSIFICATION OF SUBJECT MATTER

H02P23/14(2006.01)i;   H02K11/215(2016.01)i;   H02K11/33(2016.01)i;   G01B21/22(2006.01)i

According to International Patent Classification (IPC) or to both national classification and IPC

### B. FIELDS SEARCHED

Minimum documentation searched (classification system followed by classification symbols)

IPC:H02P,H02K,G01B

Documentation searched other than minimum documentation to the extent that such documents are included in the fields searched

Electronic data base consulted during the international search (name of data base and, where practicable, search terms used)

CNTXT, ENTXTC, CNKI, IEEE: 电动机, 电机, 马达, 校正, 校准, 修正, 角度, 稳定, 滤波器, 误差, 偏差, motor, calibration, angle, filter+, deviation, error

### C. DOCUMENTS CONSIDERED TO BE RELEVANT

| Category* | Citation of document, with indication, where appropriate, of the relevant passages | Relevant to claim No. |
| --- | --- | --- |
| PX | CN 118739954 A (QUANZHOU CONNTEK MICROELECTRONICS TECHNOLOGY CO., LTD.) 01 October 2024 (2024-10-01)<br>description, paragraphs 39-66, and figures 2-5 | 1-19 |
| A | CN 108885123 A (FRABA B.V.) 23 November 2018 (2018-11-23)<br>description, paragraphs 33-49, and figures 1a-3 | 1-19 |
| A | CN 117168530 A (QUANZHOU CONNTEK MICROELECTRONICS TECHNOLOGY CO., LTD.) 05 December 2023 (2023-12-05)<br>entire document | 1-19 |
| A | CN 206825214 U (JIANGXI FENGHE COMPUTER NUMERICAL CONTROL TECHNOLOGY CO., LTD.) 02 January 2018 (2018-01-02)<br>entire document | 1-19 |
| A | JP 2019191011 A (DENSO CORP.) 31 October 2019 (2019-10-31)<br>entire document | 1-19 |

☐ Further documents are listed in the continuation of Box C.          ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 July 2025** | **22 July 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/089338**

| Patent document cited in search report | | | Publication date (day/month/year) | Patent family member(s) | | | Publication date (day/month/year) |
|---|---|---|---|---|---|---|---|
| CN | 118739954 | A | 01 October 2024 | None | | | |
| CN | 108885123 | A | 23 November 2018 | DE | 102016101965 | A1 | 10 August 2017 |
| | | | | US | 2020292360 | A1 | 17 September 2020 |
| | | | | WO | 2017133806 | A1 | 10 August 2017 |
| | | | | JP | 2019504999 | A | 21 February 2019 |
| | | | | EP | 3411667 | A1 | 12 December 2018 |
| | | | | JP | 3228333 | U | 22 October 2020 |
| CN | 117168530 | A | 05 December 2023 | None | | | |
| CN | 206825214 | U | 02 January 2018 | None | | | |
| JP | 2019191011 | A | 31 October 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 116892970 A
- CN 117168530 A

- CN 115355937 A